# FASCICULE DE BREVET EUROPEEN

(11) **EP 3 123 884 B1**
(45) Date de publication et mention de la délivrance du brevet: **26.09.2018**
(21) Numéro de dépôt: 15425055.9
(22) Date de dépôt: 28.07.2015
(51) Int. Cl.: A43B 5/04, A43B 13/18, A43C 15/16, B29D 35/14

(54) **SEMELLE DE CHAUSSURE DE SPORT DE GLISSE**
SOHLE EINES GLEITSPORTSCHUHS
SHOE SOLE FOR GLIDING SPORTS

(43) Date de publication de la demande: 01.02.2017
(73) Titulaire: Rossignol Lange S.R.L., 31044 Montebelluna (IT)
(72) Inventeur: Simonetti, Luigi, 38011 Cavareno (TN) (IT)
(74) Mandataire: Novaimo

(56) Documents cités:
- EP-A1- 1 210 883
- EP-A1- 2 465 371
- EP-A2- 2 737 815
- FR-A1- 2 887 178
- US-A1- 2010 269 374
- US-A1- 2013 139 412
- US-A1- 2014 026 441

## Description

L'invention concerne une semelle de chaussure de sport de glisse, notamment une semelle de chaussure de ski de fond, et une chaussure de sport en tant que telle intégrant une telle semelle. Elle concerne aussi un procédé de fabrication d'une telle semelle et d'une telle chaussure de sport.

Une semelle de chaussure de ski de fond exige d'une part une rigidité et une résistance importantes, pour supporter de manière fiable une fixation avec le ski de fond et participer à une bonne transmission des efforts pendant la pratique du ski de fond, et exige d'autre part un niveau de confort satisfaisant, notamment pour les phases hors de la pratique du ski, comme la marche, le tout avec un poids minimal. Face à ces exigences
contradictoires, les solutions existantes restent insatisfaisantes.

Par exemple, le document EP1210883A1 divulgue une chaussure de ski de fond mais ne divulgue pas une plaque composite avec des nervures de renfort.

Ainsi, un premier objet de la présente invention consiste à proposer une semelle de chaussure de sport qui permet d'atteindre une rigidité suffisante pour une utilisation pour la pratique du sport, notamment le ski de fond.

Un second objet de la présente invention consiste à proposer une semelle de chaussure de sport présentant un poids minimal.

Un troisième objet de la présente invention consiste à proposer une semelle de chaussure de sport qui permet d'atteindre un confort satisfaisant.

Un quatrième objet de la présente invention consiste à proposer une semelle de chaussure de sport qui peut être fabriquée à un coût raisonnable.

Selon le concept de l'invention, la semelle de chaussure de sport comprend :
- une plaque en matériau composite comprenant des nervures de renfort ;
- des composants arrière et avant s'étendant sous la plaque et formant des crampons.

Les nervures peuvent prendre des formes avantageuses décrites ci-après. La plaque en matériau composite s'étend avantageusement sur une longueur d'au moins 60% inclus de la longueur de la semelle.

L'invention est plus précisément définie par les revendications.

Ces objets, caractéristiques et avantages de la présente invention seront exposés en détail dans la description suivante d'un mode d'exécution particulier illustré sur une chaussure de ski de fond à titre non-limitatif en relation avec les figures jointes parmi lesquelles :
La figure 1 représente une vue éclatée d'une chaussure de ski de fond comprenant une semelle selon un mode de réalisation de l'invention.
La figure 2 représente une vue de côté d'une plaque de la semelle selon le mode de réalisation de l'invention.
La figure 3 représente une vue de dessus de la plaque de la semelle selon le mode de réalisation de l'invention.
La figure 4 représente une vue de dessous de la plaque de la semelle selon le mode de réalisation de l'invention.
La figure 5 représente une vue de face en coupe A-A de la plaque de la semelle selon le mode de réalisation de l'invention.
La figure 6 représente une vue de face en coupe B-B de la plaque de la semelle selon le mode de réalisation de l'invention.
La figure 7 représente une vue de dessous de la semelle selon le mode de réalisation de l'invention.
La figure 8 représente une vue de dessous d'un composant avant de la semelle selon le mode de réalisation de l'invention.
La figure 9 représente une vue de dessus de la semelle selon le mode de réalisation de l'invention.
La figure 10 représente une vue en perspective de dessus de la semelle selon le mode de réalisation de l'invention.

Dans la description suivante, la direction verticale désigne la direction de bas en haut, c'est-à-dire de la semelle de la chaussure vers le haut de la chaussure. La direction longitudinale désigne la direction perpendiculaire à la direction verticale, orientée de l'arrière vers l'avant de la chaussure (et de la semelle). La direction transversale est la direction perpendiculaire à la direction longitudinale dans le plan de la semelle.

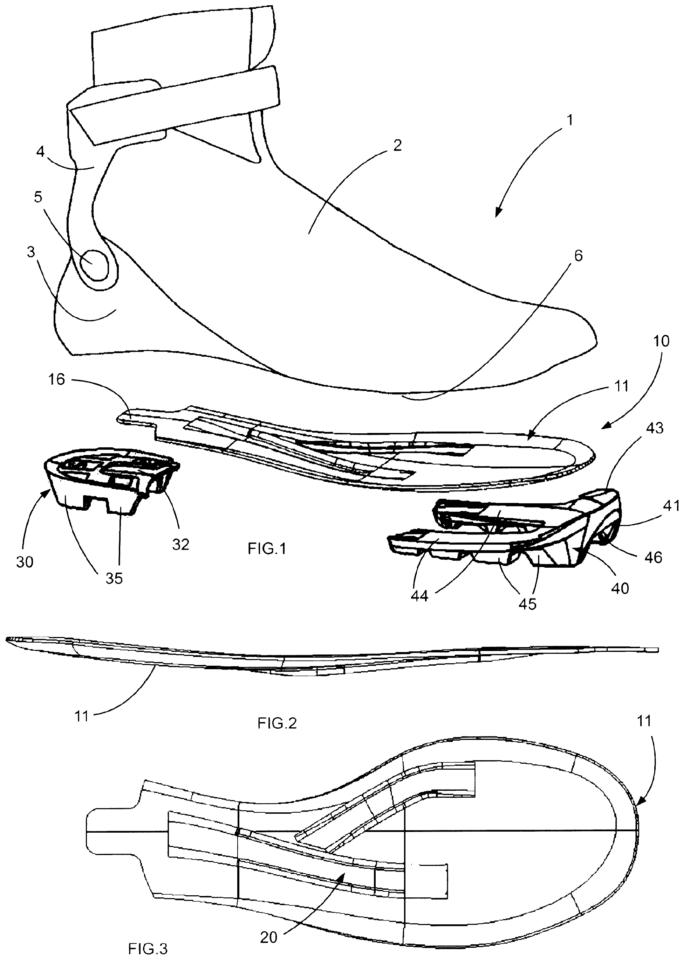

La figure 1 illustre une chaussure de ski de fond 1, qui comprend une tige 2 et une semelle 10, dont un procédé de fabrication va être décrit ci-dessous. Cette chaussure est particulièrement adaptée à la pratique dite « skating ». La tige 2 est formée d'une partie souple composée d'une ou plusieurs couches en matériau textile et/ou plastique. Cette tige peut être renforcée d'un contrefort arrière 3 et éventuellement d'un collier 4 articulé sur le contrefort arrière 3 au niveau de l'axe d'articulation 5 de la cheville. Cette tige 2 est solidarisée à la surface supérieure de la semelle 10 et peut déborder éventuellement de la semelle dans la partie arrière.

Selon le mode de réalisation de l'invention, le procédé de fabrication de la semelle 10 comprend une première étape comprenant la fabrication d'une plaque plane, en matériau composite. Cette plaque plane est découpée selon la forme prédéfinie pour la pointure de chaussure souhaitée afin d'obtenir la plaque composite destinée à former au moins une partie de la semelle 10.

Par ailleurs, dans le mode de réalisation illustré, la plaque plane composite est raccourcie au niveau de sa partie arrière, où une languette 16 est formée. La plaque composite pourrait toutefois couvrir l'ensemble de la semelle de l'extrémité avant jusqu'à l'extrémité arrière de celle-ci.

Le matériau composite utilisé pour la plaque plane comprend une matrice, par exemple une matrice thermoplastique telle qu'une matrice de polyuréthane thermoplastique (TPU), et un renfort, par exemple comprenant des fibres de verre et/ou de carbone. Ces fibres de renfort s'étendent de préférence sur toute la surface de la plaque plane, de manière continue, ce qui permet d'utiliser des fibres de grande longueur. Avantageusement, la plaque plane intègre ainsi des fibres de renfort de longueur supérieure ou égale à 100 mm. Naturellement, d'autres matériaux sont envisageables, comme par exemple des fibres d'aramide ou des fibres naturelles utilisables seules ou en association avec d'autres fibres. La plaque plane peut être réalisée en une seule couche ou en variante être obtenue par la superposition de plusieurs couches, ces différentes couches pouvant être de même épaisseur ou non, et en des matériaux identiques ou non. De préférence, la plaque plane présente une épaisseur totale d'environ 1,5 mm, avantageusement comprise entre 1,2 et 1,8 mm.

La plaque plane selon le mode de réalisation de l'invention est composée de six couches comportant des fibres de carbone et/ou de verre, chacune d'épaisseur 0,25 mm. Les deux couches à l'extérieur sont constituées de fibres de carbone et de résine TPU, et les quatre couches à l'intérieur sont constituées de fibres de verre et de résine TPU. L'empilage des différentes couches composant la plaque plane 11 est symétrique. En variante, seules des couches comportant des fibres de verre peuvent être superposées.

Les fibres utilisées peuvent présenter la même orientation dans chaque couche superposée de la plaque composite. De plus, chaque couche peut comprendre une combinaison de fibres croisées, perpendiculaires entre elles. Notamment, elle peut comprendre des fibres longitudinales et transversales.

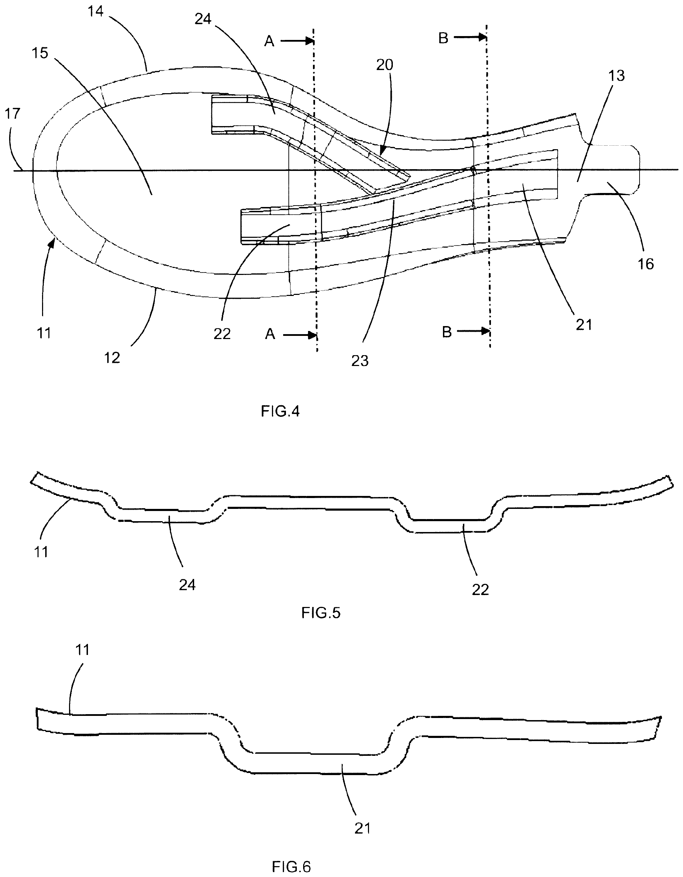

Le procédé de fabrication comprend ensuite une seconde étape dans laquelle la plaque plane en matériau composite est positionnée dans un moule, qui lui donne une forme galbée, particulièrement visible sur la figure 2, adaptée à l'anatomie du pied, et forme des nervures 20 de renfort, dont le relief est orienté vers le dessous. Il en résulte une plaque 11. Cette seconde étape est obtenue par thermoformage de la plaque plane, du fait qu'elle intègre une matrice thermoplastique. Les nervures 20 de renfort permettent d'atteindre une rigidité optimale, en torsion et en flexion, de la plaque 11, et donc de la semelle, qui ne peut pas être atteinte par la plaque composite sans nervure. Les nervures présentent une hauteur inférieure ou égale à 5 mm, de préférence comprise entre 2 et 4 mm inclus. Elles présentent de plus une largeur inférieure ou égale à 20 mm, de préférence comprise entre 5 et 15 mm inclus. Le galbe est léger, entre 1 à 2 mm inclus sur les côtés de la plaque, qui reste donc sensiblement plane. Ces formes et dimensions sont particulièrement illustrées par les figures 3 à 5.

Selon le mode de réalisation, les nervures 20 de renfort présentent une forme en Y, formée par une première nervure arrière 21 s'étendant dans la partie centrale de la plaque, c'est-à-dire suivant sensiblement l'axe longitudinal 17 de la plaque 11, et vers l'arrière de la semelle finalisée, comme cela sera illustré par la suite, principalement dans la zone de la voûte plantaire, sensiblement selon la direction longitudinale proche de l'axe central 27 longitudinal de la semelle. Cette nervure arrière 21 se prolonge vers l'avant par une nervure extérieure 22, sensiblement parallèle au bord extérieur 12 de la plaque 11, destiné à une position du côté externe du pied d'un utilisateur, c'est-à-dire du côté de sa malléole externe. A l'intersection 23 des deux premières nervures 21, 22, une seconde nervure intérieure 24 s'étend vers l'avant, du côté interne de la plaque 11, destiné à une position du côté interne du pied d'un utilisateur, c'est-à-dire du côté de sa malléole interne. Cette seconde nervure 24 est courbée, sensiblement parallèle au bord intérieur 14 de la plaque 11. Le point d'intersection 23 des nervures est sensiblement positionné au niveau de la partie centrale de la semelle 10. Les deux nervures 21, 22 sont dans la continuité l'une de l'autre et sensiblement de même longueur. La seconde nervure intérieure 24 s'étend légèrement plus en avant de la plaque 11 que la nervure extérieure 22. Selon le mode de réalisation de l'invention, cette seconde nervure intérieure 24 ne rejoint pas tout à fait les nervures 21 et 22, présente une hauteur qui diminue progressivement jusqu'à disparaître sensiblement au niveau du point d'intersection 23 mentionné ci-dessus.

Les nervures, qui s'étendent longitudinalement au moins en partie dans les zones centrales ou proches du centre de la semelle, remplissent ainsi une première fonction de rigidification de la zone centrale de la semelle, notamment pour sa rigidité par rapport à la flexion de la semelle. Cette fonction est notamment particulièrement remplie par la nervure arrière 21. Elle stabilise ainsi la semelle dans sa partie arrière. D'autre part, la forme en Y des nervures permet aux deux nervures 22, 24 avant de remplir une fonction de rigidification de la semelle par rapport à la torsion.

Selon le mode de réalisation, les nervures 20 de renfort occupent sensiblement la moitié de la longueur de la plaque 11. La partie de la plaque 11 sans nervure 20 se divise en une partie arrière 13, représentant environ un quart de la longueur de la plaque 11, et une partie avant 15, représentant environ un quart de la longueur de la plaque 11. La longueur totale de cette partie sans nervure, réunissant les deux parties arrière 13 et avant 15, représente sensiblement sur la moitié de la longueur de la plaque 11. Les nervures 20 de renfort occupent une zone centrale de la plaque 11, sur une longueur comprise avantageusement entre 25% et 75% de la longueur totale de la plaque, de préférence 50%. En variante, les nervures 20 de renfort peuvent s'étendre dans la partie avant 15 de la plaque, voire même s'étendre sur toute sa longueur.

Naturellement, l'invention ne se limite pas aux nervures du mode de réalisation décrit. Ces nervures peuvent présenter d'autres formes et/ou dimensions. En variante, les nervures 20 de renfort peuvent s'étendre dans la partie avant 15 de la plaque 11, voire même s'étendre sur toute la longueur de la plaque 11.

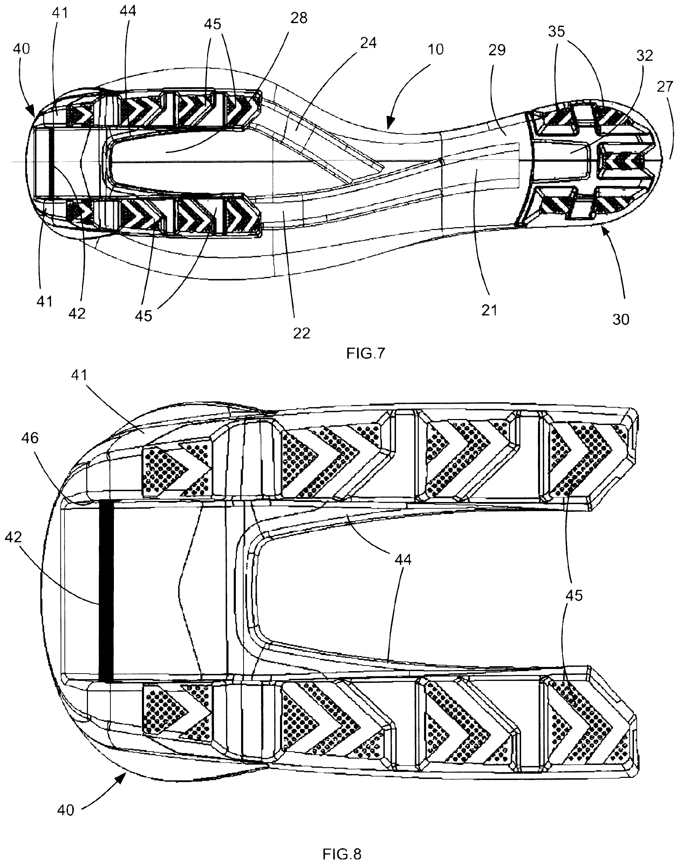

Notamment, les nervures avant 22, 24 peuvent être prolongées dans la partie avant 15 de la plaque 11 pour s'étendre sur une longueur de 25 à 80% de la zone avant 28 de la semelle 10, particulièrement visible sur la figure 7. Elles peuvent s'étendre sur plus de la moitié de la zone avant 28 de la semelle.

De plus, la nervure arrière 21 peut être prolongée dans la partie arrière 13 de la plaque 11 pour s'étendre sur une longueur représentant entre 30 et 60% de la zone arrière 29 de la semelle 10. La nervure arrière 21 est en position sensiblement centrale de la semelle Autrement dit, la nervure arrière 21 peut être orientée d'un angle compris entre 0 et 45 degrés par rapport à l'axe longitudinal 17 de la plaque 11. La nervure arrière 21 peut également être décalée de plus ou moins 5 mm par rapport à l'axe longitudinal. De plus, la nervure arrière peut s'étendre sur une longueur représentant entre 30 et 60% de la zone arrière de la semelle 10.

En remarque, la longueur de la semelle 10 se mesure de la partie la plus avancée du composant avant 40 à la partie la plus reculée du composant arrière 30, après l'assemblage final de la semelle 10 qui sera décrit plus loin.

De plus, les nervures représentées présentent une forme en Y. En variante, elles peuvent ne pas s'étendre sur toute cette forme, la continuité de la forme Y pouvant donc être interrompue. Notamment, une ou plusieurs nervures peut ne pas s'étendre jusqu'au point d'intersection central 23, auquel cas les nervures ne se rejoignent pas nécessairement toutes.

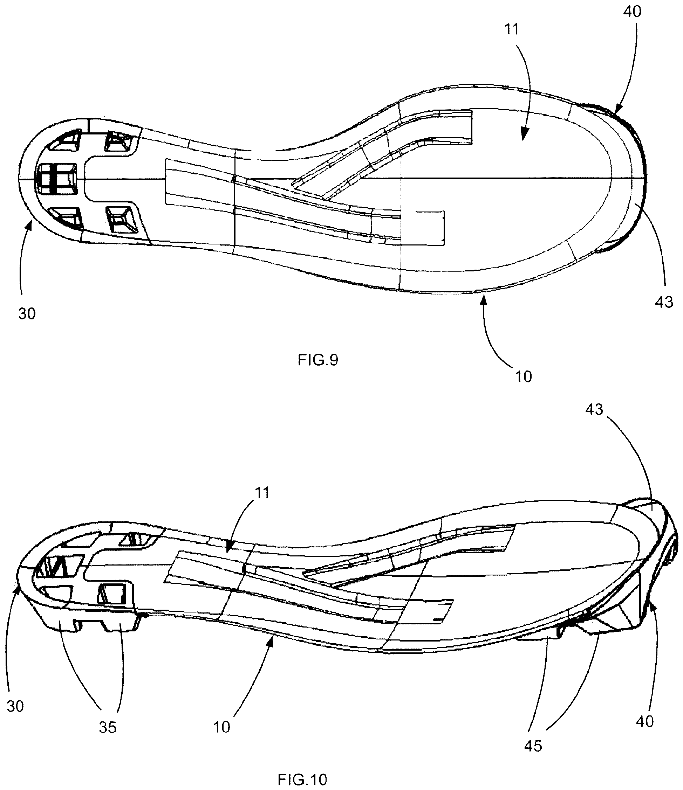

Les figures 9 et 10 montrent la semelle 10 et la plaque 11 de dessus. Les nervures 20 de renfort apparaissent ici en creux, c'est-à-dire se présentent sous une forme de rainures selon cette vue opposée.

La plaque 11 ainsi formée par les deux premières étapes du procédé représente l'élément essentiel de la semelle de chaussure de sport. Sa surface supérieure présente une courbure dans le sens longitudinal, visible sur la figure 2, et est sensiblement plane transversalement, à l'exception du léger galbe formant un pourtour de très faible hauteur, relevé, et des rainures. Dans une autre variante, cette plaque 11 pourrait être sensiblement plane dans le sens longitudinal. Elle est destinée à être solidarisée à la surface inférieure 6 de la tige 2 d'une chaussure de sport, par tout moyen mécanique ou autre, avantageusement par collage.

Les figures 7, 9 et 10, représentent la semelle 10 terminée. Pour cela, le procédé de fabrication comprend une troisième étape comprenant la fabrication d'un composant arrière 30 et d'un composant avant 40, puis une quatrième étape d'assemblage de ces composants 30, 40 avec la plaque 11. La semelle 10 finalisée présente ainsi un axe central 27 longitudinal sensiblement aligné avec l'axe longitudinal 17 de la plaque 11. Ces deux composants assemblés ont pour première fonction de former une surface inférieure de semelle adaptée à la marche. Ils ont pour seconde fonction de former un élément de fixation adapté pour coopérer avec un dispositif de fixation complémentaire agencé sur une planche de glisse, un ski de fond selon l'exemple illustré.

Ainsi, le composant arrière 30 est formé de crampons 35 en matériau plastique, permettant de remplir une fonction d'amortissement et d'anti-dérapage, lors de la marche par exemple. Le composant arrière 30 comprend un logement central 32 sensiblement plan et rectangulaire pour la réception d'une languette 16 agencé en partie arrière de la plaque, pour faciliter la coopération et l'assemblage des deux éléments 11, 30. Le composant arrière 30 peut être formé en matériau plastique, par exemple par exemple du polyuréthane de dureté comprise entre 40 et 50 ShD, ou tout autre matériau plastique de dureté équivalente.

Dans une variante non représentée, la plaque 11 pourrait couvrir entièrement la surface supérieure du composant arrière 30. Toutefois, la réalisation illustrée avec la plaque 11 raccourcie à l'arrière permet à la chaussure de donner plus d'amorti et moins de rigidité au niveau du talon, favorisant ainsi le confort de l'utilisateur.

Le composant avant 40 comprend en partie avant deux extensions latérales 41, s'étendant vers le bas, ces extensions latérales comprenant chacune une ouverture 46 pour la réception d'une barre de fixation 42, destinée à coopérer avec un dispositif de fixation d'un ski de fond, selon une norme de fixation habituelle. Ces deux extensions latérales 41 sont reliées entre elles transversalement par une liaison en matériau plastique. Ainsi le composant avant 40 présente une forme un U ou en fer à cheval, dont une partie arrondie se trouve vers l'extrémité avant de la semelle, d'où s'étendent en partie arrière du composant avant 40 deux branches latérales 44 dans une direction sensiblement longitudinale. Les extensions latérales 41 et branches latérales 44 comportent des crampons 45. En partie avant haute, ce composant avant 40 présente un léger rebord 43, délimitant un logement et une butée pour la réception de la partie avant de la plaque 11 ainsi que de la tige 2. Ensuite, le reste de ce composant avant 40 s'étend sous la plaque 11. Notamment, les deux branches latérales 44 s'étendent vers l'arrière jusqu'à venir dans le prolongement des deux nervures, respectivement intérieure 24 et extérieure 22, précédemment décrites. Ces deux extensions latérales 44 forment une base de réception de crampons 45. Avantageusement le composant avant 40 est composé de deux matériaux différents. Une première partie est fabriquée en un premier matériau plastique rigide, par exemple du polyuréthane de dureté comprise entre 48 et 55 ShD, ou tout autre matériau plastique de dureté équivalente, au moins dans la zone supportant la barre de fixation 42, soit au niveau des extensions latérales 41, et s'étendant éventuellement entre les crampons et la plaque 11 au niveau des branches latérales 44. Une deuxième partie est fabriquée avantageusement dans un second matériau plastique moins rigide favorable à la marche, par exemple en polyuréthane de dureté comprise entre 40 et 50 ShD, ou tout autre matériau plastique de dureté équivalente. Avantageusement, les crampons 45 formant la partie inférieure du composant avant 40 sont réalisés dans le même matériau que les crampons 35 du composant arrière 30. De préférence, ce composant avant 40 est fabriqué par injection plastique, le second matériau plastique plus souple étant surinjecté sur le premier matériau plus rigide. Bien entendu, ces première et deuxième parties pourraient être en seul matériau. Les deux branches latérales 44 sont dans le prolongement des deux nervures extérieure 22 et intérieure 24. Dans une autre variante, les deux branches latérales 44 pourraient être superposées sur ces nervures.

Selon le mode de réalisation, les deux branches latérales 44 se prolongent jusqu'à une zone correspondant aux métatarses les plus reculés. Cette zone correspond à la zone comprise en arrière d'environ 5 à 15 mm, dans la direction longitudinale, de la zone de plus grande largeur (mesurée dans la direction transversale) de la semelle. Les crampons 45 occupent presque toute la longueur des extensions. Avantageusement, ils s'arrêtent au niveau de la zone de plus grande largeur de la semelle, voire au maximum 15 mm en arrière de cette zone de plus grande largeur. Cette structure du composant avant permet de minimiser la zone de plastique de la semelle, puisqu'il n'y a presque pas de matériau plastique en partie centrale de la semelle, à l'exception d'une liaison en partie avant de la semelle, explicitée ci-dessus.

Les deux composants 30, 40 décrits ci-dessus sont de préférence fabriqués en matériau plastique par un procédé d'injection, dans la troisième étape du procédé, avant leur assemblage par tout moyen mécanique ou autre avec la plaque 11, avantageusement par collage. En variante, ces deux composants peuvent être fabriqués dans un autre matériau, significativement plus souple que le matériau composite de la plaque 11. Selon une variante de réalisation particulièrement avantageuse, ces deux composants 30, 40, voire un seul, sont directement fabriqués par surinjection plastique sur la plaque 11, ce qui assure une fixation optimale entre ces différents éléments de la semelle. Pour cela, le matériau plastique injecté des deux composants est compatible avec le matériau utilisé pour la matrice du matériau composite de la plaque 11 : ils sont par exemple tous en un matériau comprenant du polyuréthane. Dans cette variante de réalisation avantageuse, les deux étapes trois et quatre susmentionnées sont donc confondues en une seule étape.

La semelle est ainsi finalisée par l'assemblage des composants 30, 40 avec la plaque 11 en matériau composite. La plaque représente toutefois l'élément essentiel de la semelle, s'étend sur une longueur représentant au moins 60% inclus, de préférence au moins 75% inclus de la longueur de la semelle. Les bords latéraux 12, 14 de la plaque 11 forment une partie significative des bords de la semelle. En remarque, cette dernière conserve une surface supérieure sensiblement plane destinée à recevoir la tige 2 de la chaussure. Elle ne comprend pas, ou très peu, de rebord sur sa périphérie (par de paroi latérale). Les deux composants avant 40 et arrière 30 peuvent présenter d'autres formes et structures. Notamment, en variante, le composant avant 40 pourrait être formé de plus de deux matériaux, ou d'un seul matériau, et le composant arrière 30 peut être formé de deux matériaux ou plus.

L'invention porte aussi sur la semelle 10 en tant que telle, qui comprend une plaque 11 en matériau composite s'étendant sur au moins 75% de la longueur de la semelle, et comprenant des nervures 20 de renfort, et qui comprend des composants arrière 30 et avant 40 s'étendant sous la plaque 11 et formant des crampons 35, 45.

L'approche choisie est particulièrement avantageuse pour fabriquer une série de semelles de pointures différentes. En effet, des composants arrière 30 et/ou avant 40 identiques peuvent être assemblés avec des plaques 11 de dimensions différentes, correspondant à des pointures différentes. Cette approche permet de minimiser le nombre de moules d'injection nécessaires pour la fabrication de ces composants 30, 40, ce qui minimise les coûts de fabrication. A titre d'exemple, pour fabriquer neuf tailles de semelles (pour neuf pointures de chaussures), il est possible de restreindre la fabrication des composants avant 40 et arrière 30 à trois tailles seulement, soit de se limiter à trois moules pour chaque composant. Avec cette approche, un même composant avant 40 et arrière 30 sera utilisé pour trois plaques 11 de dimensions différentes.

Par ailleurs, dans un mode de réalisation avantageux, le contrefort arrière 3 ainsi que le collier 4 peuvent être découpés dans la même plaque plane en matériau composite utilisée pour obtenir la plaque 11 de la semelle. Cette plaque est alors découpée au gabarit adapté pour l'arrière du pied et mise en forme par moulage pour être utilisé en renfort sur la tige 2. Ainsi la même plaque en matériau composite peut être utilisée pour différentes pièces formant la chaussure, ce qui minimise les coûts de fabrication et d'approvisionnement des matières premières.

Le contrefort arrière 3 enveloppe avantageusement le talon. Pour cela, il remonte en particulier sur les côtés latéraux de la tige dans la zone des malléoles. Le contrefort possède également des rebords, formant des rabats inférieurs, qui viennent recouvrir plus ou moins partiellement la surface inférieure 6 de la tige, sur laquelle est solidarisée la semelle. Ainsi, les parties du rabat inférieur forment une partie de la semelle. Dans ce cas, une fente longitudinale existe avantageusement entre les deux rebords latéraux du contrefort. La plaque 11 de la semelle est ensuite solidarisée à cet ensemble tige 2 et rabats inférieurs du contrefort arrière 3, par exemple par collage, et en particulier recouvre la fente du contrefort.

Dans la réalisation précédente avec contrefort arrière présentant des rabats inférieurs, la plaque 11 de la semelle s'étroitise progressivement d'avant en arrière, pour atteindre une largeur (avant le talon) minimale comprise entre 35 mm et 55 mm, de préférence entre 40 mm et 50 mm. Elle s'élargit ensuite pour former la partie arrière de la plaque. Dans la zone de plus grande largeur de la plaque, située dans la zone des métatarses, la largeur maximale est sensiblement doublée par rapport à la largeur minimale. Dans la partie arrière, la semelle ne recouvre pas toute la surface inférieure de la tige. En effet, les rabats inférieurs du contrefort arrière permettent de prolonger latéralement la surface de la semelle, en formant la surface inférieure de la tige. Ces rabats inférieurs permettent ainsi de compléter la plaque composite de la semelle 10. En variante, les rabats inférieurs peuvent remplacer une partie de la plaque composite de la semelle 10, notamment en regard de la partie arrière de la tige.

Finalement, la solution selon l'invention présente donc les avantages suivants :
- la plaque 11 en matériau composite permet de former une semelle très rigide ayant des zones préférentielles plus rigides encore par l'ajout de nervures ;
- elle permet de former une semelle rigide et légère, particulièrement performante, et notamment adaptée à la compétition ;
- du fait de cette rigidité, la quantité de matériau plastique utilisée est minimisée, voire même supprimée en partie centrale de la semelle ;
- elle peut être mise en oeuvre facilement, permettant la fabrication rapide et à moindre coût d'une semelle de chaussure de sport, en particulier en minimisant le nombre de moules d'injection utilisés.

## Revendications

1. Semelle (10) de chaussure de ski de fond, **caractérisée en ce qu'**elle comprend :
- une plaque (11) en matériau composite comprenant des nervures (20) de renfort, comprenant deux nervures extérieure (22) et intérieure (24) disposées en parties latérales de la plaque (11) dans la moitié antérieure de la semelle. ; et
- des composants arrière (30) et avant (40) s'étendant sous la plaque (11) et formant des crampons (35, 45), un composant avant (40) comprenant un dispositif de fixation d'une barre d'articulation (42) et présentant une forme en U d'où s'étendent deux branches latérales (44) de réception de crampons (45).

2. Semelle (10) de chaussure de ski de fond selon la revendication précédente, **caractérisée en ce que** les deux nervures extérieure (22) et intérieure (24) s'étendent sur une longueur comprise entre 30 et 80% de la longueur de la moitié avant de la semelle définie entre le milieu de la semelle et son extrémité avant.

3. Semelle (10) de chaussure de ski de fond selon l'une des revendications précédentes, **caractérisée en ce qu'**elle comprend une nervure arrière (21) en position centrale de la semelle.

4. Semelle (10) de chaussure de ski de fond selon la revendication précédente, **caractérisée en ce que** la nervure arrière (21) s'étend sur une longueur représentant entre 30 et 60% de la longueur de la moitié arrière de la semelle définie entre le milieu de la semelle et son extrémité arrière.

5. Semelle (10) de chaussure de ski de fond selon l'une des revendications précédentes, **caractérisée en ce qu'**elle comprend :
- deux nervures avant (22, 24) et une nervure arrière (21), disposées au sein de la plaque (11), et s'étendant sur une longueur comprise entre 25% et 75% de la longueur totale de la semelle ; et/ou
- deux nervures avant (22, 24) et une nervure arrière (21), disposées dans une zone centrale de la semelle qui se rejoignent dans une zone centrale de la semelle.

6. Semelle (10) de chaussure de ski de fond selon l'une des revendications précédentes, **caractérisée en ce que** la plaque (11) s'étend sur au moins 60% inclus de la longueur de la semelle (10), ou sur au moins 75% inclus de la longueur de la semelle et/ou **en ce que** la plaque (11) comprend une épaisseur comprise entre 1,2 et 1,8 mm inclus.

7. Semelle (10) de chaussure de ski de fond selon la revendication précédente, **caractérisée en ce que en ce que** les nervures (20) de renfort présentent une hauteur inférieure ou égale à 5 mm, voire comprise entre 2 et 4 mm et une largeur inférieure ou égale à 20 mm, voire comprise entre 5 et 15 mm.

8. Semelle (10) de chaussure de ski de fond selon l'une des revendications précédentes, **caractérisée en ce que** les extrémités arrières deux branches latérales (44) sont positionnées au maximum entre 5 et 15 mm en arrière se la zone de plus grande largeur de la semelle (10), et/ou **en ce que** les extrémités arrières des crampons (45) des deux branches latérales (44) sont positionnées au maximum entre la zone de plus grande largeur de la semelle (10) et 15 mm en arrière de cette zone de plus grande largeur.

9. Semelle (10) de chaussure de ski de fond selon l'une des revendications précédentes, **caractérisée en ce que** les deux branches latérales (44) sont disposées dans le prolongement de deux nervures extérieure (22) et intérieure (24) de la plaque plane (11).

10. Semelle (10) de chaussure de ski de fond selon l'une des revendications précédentes, **caractérisée en ce que** le composant en matériau composite comprend une matrice en matériau plastique compatible avec le matériau d'au moins un composant avant (40) et/ou arrière (30) pour l'assemblage du au moins un composant avec la plaque (11) par surinjection.

11. Chaussure de ski de fond, **caractérisée en ce qu'**elle comprend une semelle (10) selon l'une des revendications précédentes.

12. Série de chaussures de ski de fond, **caractérisée en ce que** chaque chaussure comprend une semelle selon l'une des revendications 1 à 10, et **en ce qu'**elle comprend deux chaussures de pointure différente dont les semelles respectives comprennent une plaque plane (11) en matériau composite de dimension différente mais au moins un composant avant (40) et/ou arrière (30) de même dimension.

13. Procédé de fabrication d'une semelle de chaussure de ski de fond selon l'une des revendications 1 à 10, **caractérisé en ce qu'**il comprend les étapes suivantes :
- découpe d'une plaque plane en matériau composite composée de fibres noyées dans une résine thermoplastique ;
- mise en forme de la plaque plane dans un moule pour former des nervures (20) de renfort et obtenir une plaque (11) ;
- fabrication de composants avant (40) et arrière (30) comprenant des crampons (45, 35) ;
- assemblage des composants (30, 40) sur la plaque (11).

14. Procédé de fabrication d'une semelle de chaussure selon la revendication précédente, **caractérisé en ce qu'**il comprend une étape de fabrication et d'assemblage de composants avant (40) et/ou arrière (30) par surinjection sur la plaque (11).

## Patentansprüche

1. Langlauf-Skischuhsohle (10), **dadurch gekennzeichnet, dass** sie Folgendes umfasst:
- eine Platte (11) aus Verbundmaterial, die Verstärkungsrippen (20) umfasst, die zwei äußere (22) und innere (24) Rippen umfassen, die an Seitenteilen der Platte (11) in der vorderen Hälfte der Sohle angeordnet sind, und
- einen hinteren (30) und einen vorderen (40) Bestandteil, die sich unter der Platte (11) erstrecken und Stollen (35, 45) bilden, wobei ein vorderer Bestandteil (40) eine Vorrichtung zur Befestigung einer Gelenkstange (42) umfasst und die Form eines U hat, von wo aus sich zwei seitliche Arme (44) zur Aufnahme von Stollen (45) erstrecken.

2. Langlauf-Skischuhsohle (10) nach dem vorhergehenden Anspruch, **dadurch gekennzeichnet, dass** sich die beiden äußeren (22) und inneren Rippen (24) über eine Länge erstrecken, die zwischen 30 und 80% der Länge der vorderen Hälfte der Sohle beträgt, die zwischen der Mitte der Sohle und ihrem vorderen Ende definiert ist.

3. Langlauf-Skischuhsohle (10) nach einem der vorhergehenden Ansprüche, **dadurch gekennzeichnet, dass** sie eine hintere Rippe (21) in mittlerer Position der Sohle umfasst.

4. Langlauf-Skischuhsohle (10) nach dem vorhergehenden Anspruch, **dadurch gekennzeichnet, dass** sich die hintere Rippe (21) über eine Länge erstreckt, die zwischen 30 und 60% der Länge der hinteren Hälfte der Sohle beträgt, die zwischen der Mitte der Sohle und ihrem hinteren Ende definiert ist.

5. Langlauf-Skischuhsohle (10) nach einem der vorhergehenden Ansprüche, **dadurch gekennzeichnet, dass** sie Folgendes umfasst:
- zwei vordere Rippen (22, 24) und eine hintere Rippe (21), die in der Platte (11) angeordnet sind und sich über eine Länge von zwischen 25% und 75% der Gesamtlänge der Sohle erstrecken, und/oder
- zwei vordere Rippen (22, 24) und eine hintere Rippe (21), die in einer mittleren Zone der Sohle angeordnet sind und in einem mittleren Bereich der Sohle zusammentreffen.

6. Langlauf-Skischuhsohle (10) nach einem der vorhergehenden Ansprüche, **dadurch gekennzeichnet, dass** sich die Platte (11) über einschließlich mindestens 60% der Länge der Sohle (10) oder über einschließlich mindestens 75% der Länge der Sohle erstreckt und/oder dass die Platte (11) eine Dicke zwischen einschließlich 1,2 und 1,8 mm umfasst.

7. Langlauf-Skischuhsohle (10) nach dem vorhergehenden Anspruch, **dadurch gekennzeichnet, dass** die Verstärkungsrippen (20) eine Höhe von kleiner oder gleich 5 mm aufweisen, d. h. zwischen 2 und 4 mm, und eine Breite von kleiner oder gleich 20 mm, d. h. zwischen 5 und 15 mm.

8. Langlauf-Skischuhsohle (10) nach einem der vorhergehenden Ansprüche, **dadurch gekennzeichnet, dass** die hinteren Enden der zwei seitlichen Arme (44) maximal zwischen 5 und 15 mm hinter dem Bereich mit der größten Breite der Sohle (10) positioniert sind und/oder dass die hinteren Enden der Stollen (45) der beiden seitlichen Arme (44) maximal zwischen dem Bereich mit der größten Breite der Sohle (10) und 15 mm hinter diesem Bereich mit der größten Breite positioniert sind.

9. Langlauf-Skischuhsohle (10) nach einem der vorhergehenden Ansprüche, **dadurch gekennzeichnet, dass** die seitlichen Arme (44) in der Verlängerung von zwei äußeren (22) und inneren (24) Rippen der ebenen Platte (11) angeordnet sind.

10. Langlauf-Skischuhsohle (10) nach einem der vorhergehenden Ansprüche, **dadurch gekennzeichnet, dass** der Bestandteil aus Verbundmaterial eine Matrix aus Kunststoffmaterial umfasst, das für das Verbinden des mindestens einen Bestandteils mit der Platte (11) durch Umspritzen mit dem Material mindestens eines vorderen (40) und/oder hinteren (30) Bestandteils kompatibel ist.

11. Langlaufskischuh, **dadurch gekennzeichnet, dass** er eine Sohle (10) nach einem der vorhergehenden Ansprüche umfasst.

12. Reihe von Langlaufskischuhen, **dadurch gekennzeichnet, dass** jeder Schuh eine Sohle nach einem der Ansprüche 1 bis 10 umfasst und dass sie zwei Schuhe mit verschiedener Schuhgröße umfasst, deren jeweilige Sohlen eine ebene Platte (11) aus Verbundmaterial mit verschiedener Abmessung, jedoch mindestens einen vorderen (40) und/oder hinteren (30) Bestandteil derselben Abmessung umfassen.

13. Verfahren zur Herstellung einer Langlauf-Skischuhsohle nach einem der Ansprüche 1 bis 10, **dadurch gekennzeichnet, dass** es die folgenden Schritte umfasst:
- Schneiden einer ebenen Platte aus Verbundmaterial, die aus in einem thermoplastischen Harz getränkten Fasern besteht,
- Einlegen der ebenen Platte in eine Form zum Formen der Verstärkungsrippen (20) und zum Erhalten einer Platte (11),
- Herstellen von vorderen (40) und hinteren (30) Bestandteilen, die Stollen (45, 35) umfassen,
- Verbinden der Bestandteile (30, 40) auf der Platte (11) .

14. Verfahren zur Herstellung einer Schuhsohle nach dem vorhergehenden Anspruch, **dadurch gekennzeichnet, dass** es einen Schritt des Herstellens und des Verbindens von vorderen (40) und/oder hinteren (30) Bestandteilen durch Umspritzen auf der Platte (11) umfasst.

## Claims

1. Ski boot sole (10), **characterized in that** it comprises:
- a plate (11) made of a composite material comprising reinforcing ribs (20), comprising two ribs, one outer (22) and one inner (24), arranged at the lateral parts of the plate (11) in the anterior half of the sole;
- rear (30) and front (40) components extending under the plate (11) and forming studs (35, 45), a front component (40) comprising a device for attaching an articulation bar (42) and is U-shaped from which extend two lateral portions (44) for accepting studs (45).

2. Ski boot sole (10) according to the preceding claim, **characterized in that** the two, outer (22) and inner (24), ribs extend over a length comprised between 30 and 80% of the length of the front half of the sole defined between the middle of the sole and the front end thereof.

3. Ski boot sole (10) according to one of the preceding claims, **characterized in that** it comprises a rear rib (21) in the central position of the sole.

4. Ski boot sole (10) according to the preceding claim, **characterized in that** the rear rib (21) extends over a length representing between 30 and 60% of the length of the rear half of the sole defined between the middle of the sole and the rear end thereof.

5. Ski boot sole (10) according to one of the preceding claims, **characterized in that** it comprises:
- two front ribs (22, 24) and a rear rib (21), which are positioned within the plate (11) and extend over a length comprised between 25% and 75% of the total length of the sole; and/or
- two front ribs (22, 24) and a rear rib (21), which are positioned in a central zone of the sole and meet in a central zone of the sole.

6. Ski boot sole (10) according to one of the preceding claims, **characterized in that** the plate (11) extends over at least 60% inclusive of the length of the sole (10), or over at least 75% inclusive of the length of the sole and/or **in that** the plate (11) comprises a thickness of between 1.2 and 1.8 mm inclusive.

7. Ski boot sole (10) according to the preceding claim, **characterized in that** the reinforcing ribs (20) have a height less than or equal to 5 mm, or even comprised between 2 and 4 mm and a width less than or equal to 20 mm or even comprised between 5 and 15 mm.

8. Ski boot sole (10) according to one of the preceding claims, **characterized in that** the rear ends of the two lateral portions (44) are positioned at most between 5 and 15 mm to the rear of the zone of greatest width of the sole (10), and/or **in that** the rear ends of the studs (45) of the two lateral portions (44) are positioned at most between the zone of greatest width of the sole (10) and 15 mm to the rear of this zone of greatest width.

9. Ski boot sole (10) according to one of the preceding claims, **characterized in that** the two lateral portions (44) are positioned in the continuation of two ribs, one outer (22) and one inner (24), of the flat plate (11).

10. Ski boot sole (10) according to one of the preceding claims, **characterized in that** the component made of composite material comprises a plastic matrix compatible with the material of at least one front (40) and/or rear (30) component so that the at least one component can be assembled with the plate (11) by overinjection moulding.

11. Ski boot, notably cross-country ski boot, **characterized in that** it comprises a sole (10) according to one of the preceding claims.

12. Series of ski boots, **characterized in that** each ski boot comprises a sole according to one of Claims 1 to 10, and **in that** it comprises two different boot sizes the respective soles of which comprise a flat plate (11) made of composite material of different sizes but at least one front (40) and/or rear (30) component of the same size.

13. Method of manufacturing a ski boot sole according to one of Claims 1 to 10, **characterized in that** it comprises the following steps:
- cutting out a flat plate of composite material made up of fibres embedded in a thermoplastic resin;
- shaping the flat plate in a mould to form reinforcing ribs (20) and obtain a plate (11);
- manufacturing front (40) and rear (30) components comprising studs (45, 35);
- assembling the components (30, 40) onto the plate (11).

14. Method of manufacturing a boot sole according to the preceding claim, **characterized in that** it comprises a step of manufacturing and assembling front (40) and/or rear (30) components by overinjection rmoulding on the plate (11).
